# EUROPÄISCHE PATENTANMELDUNG

(11) **EP 1 270 703 A2**
(43) Veröffentlichungstag der Anmeldung: **02.01.2003**
(21) Anmeldenummer: 02013287.4
(22) Anmeldetag: 18.06.2002
(51) Int. Cl.: C09J 175/04, C09J 5/06, B27K 7/00, B65D 39/00

(54) **Polyurethan-Schmelzklebstoffe zur Herstellung von Korkstopfen**

(30) Priorität: 27.06.2001 DE 10130887
(71) Anmelder: Henkel Kommanditgesellschaft auf Aktien, 40589 Düsseldorf-Holthausen (DE)
(72) Erfinder: Franken, Uwe, Dr., 41542 Dormagen (DE); Primke, Hartmut, Dr., 73441 Bopfingen (DE); De Alvaro, Carlos, Barcelona (ES)

(57) **Zusammenfassung**

Reaktive Schmelzklebstoffe mit einem Erweichungspunkt zwischen 90 °C und 160 °C - insbesondere reaktive Polyurethan - Schmelzklebstoffe - eignen sich zur Verklebung von Formkörpern aus Agglomeratkork mit Scheiben aus Naturkork. Auf diese Weise lassen sich hochwertige Korkstopfen - Verbundkörper zum Verschließen von Getränkeflaschen in sehr effizienter und kostengünstiger Weise herstellen.

## Beschreibung

Die vorliegende Erfindung betrifft die Verwendung eines reaktiven Schmelzklebstoffes zur Herstellung von Korkstopfen sowie ein Verfahren zur Herstellung von Korkstopfen und die Verwendung derartig hergestellter Korkstopfen.

Für das Verschließen von Flaschen, die hochwertige Getränke, insbesondere alkoholische Getränke wie Wein oder Schaumweine (Champagner, Cava oder Sekt) enthalten, werden seit altersher Flaschenkorken verwendet. Traditionell werden diese aus der Korkrinde der Korkeiche (Quercus suber) ausgestanzt, diese Gewinnung von Kork ist bekanntlich auf wenige Regionen der Erde begrenzt, in denen die Korkeichen in ökonomischer Weise angebaut und die Korkrinde gewonnen werden kann. Diese Regionen begrenzen sich im wesentlichen auf die Länder Portugal und Spanien sowie in geringerem Umfang Frankreich, Italien, Algerien, Marokko und Tunesien. Die Nachfrage nach Naturkork für die Verpackung der oben genannten hochwertigen Getränke übersteigt bei weitem die Weltproduktionskapazität von qualitativ einwandfreiem Korkmaterial. Guter Kork ist hellbraun, dicht und elastisch, seine Zellen sind hohl und luftgefüllt. Mindere Qualitäten des natürlichen Korkes haben häufig Defekte wie z.B. poröses löcheriges und mehliges Zellwandmaterial oder größere Hohlräume im Korkmaterial, die eine mangelnde Dichtigkeit des Korkstopfens verursachen können und damit die Qualität des gelagerten Produktes negativ beeinflussen können. Weiterhin können Korken gewisse Verunreinigungen enthalten aus denen bei der Chlorbleiche u.a. das muffig riechende, äußerst geruchsintensive 2,4,6-Trichloranisol entsteht. Dies führt bei Weinen zu dem sogenannten "Korkgeschmack" der die Qualität des gelagerten Produktes erheblich beeinflussen oder gefährden kann.

Es hat daher nicht an Versuchen gefehlt, alternative Flaschenverschlüsse zum hochwertigen Naturkorkstopfen bereitzustellen. So werden viele Weine in Flaschen mit Schraubverschlüssen angeboten, die eine Kunststoffdichtung enthalten. Die Patentanmeldung CA-A-1177600 beschreibt und beansprucht eine Methode zur Herstellung von Stopfen aus Kunststoffmaterial wie z.B. Ethylenvinylacetatcopolymere durch Spritzguss. Die US-A-4042543 beschreibt eine Zusammensetzung für die Herstellung von Stopfen enthaltend Polyethylen oder Ethylenvinylacetatcopolymere die mit Teilchen aus Naturkork vermischt werden. Dazu werden die Bestandteile vermischt und auf Temperaturen von etwa 250 °C erhitzt um das Copolymer aufzuschmelzen und die Korkpartikel darin zu verteilen. Die US-A-5317047 beschreibt Zusammensetzungen aus holzartigen Pflanzenmaterialien wie Naturkork oder Holz, die mit einem polymeren Bindemittel wie z.B. Polyurethanen oder Acrylaten gebunden werden und weiterhin Kunststoffmaterial mit geschlossenzelliger Struktur wie z. B. expandierbaren Mikrohohlkugeln enthalten, sowie deren Verwendung zur Herstellung von Stopfen für Flaschen.

Derartige offensichtliche "Ersatzprodukte" für Naturkork werden jedoch von Kennern hochwertiger alkoholischer Getränke nicht akzeptiert. Als Alternative werden daher sogenannte Korkagglomerate vorgeschlagen, die es gestatten, hochwertiges Korkmaterial effizienter zu nutzen. Hierzu werden die Reste bei der Korkstopfenherstellung und Verschnittmaterial granuliert und mit Bindemitteln wie Klebstoffdispersionen oder auch flüssigen oder pastösen Polyurethan - Klebstoffen zu plattenförmigen Formkörpern gebunden, aus denen die Korkstopfen ausgestanzt werden können. Eine weitere Methode formt aus dem Gemisch aus zermahlenem Korkmaterial und Bindemitteln im Strang - Extrusionsverfahren ähnliche Agglomeratkorken. Aus Qualitätsgründen wie z. B. der Geschmacksneutralität gegenüber dem in der Flasche gelagerten Produkt oder auch der Festigkeit des Korks werden Agglomeratkorken häufig mit dünnen Scheiben aus Naturkork zu kombinierten Korkverbundkörpern zusammengefügt. Ein derartiges Verfahren wird z. B. in der US-A-4521266 beschrieben. Im Stand der Technik ist die Verklebung der Naturkorkscheiben mit Korkagglomerat - Formkörpern mit Hilfe von Dispersionsklebstoffen auf Polyurethan- oder Acrylatbasis bekannt. Diese Verwendung von Dispersionsklebstoffen birgt den Nachteil, daß nach erfolgter Klebstoffapplikation die zu verklebenden Korkelemente mit relativ hohem Energie- und Zeitaufwand getrocknet werden müssen, um die notwendige Festigkeit der Verklebung zu gewährleisten. Um eine hohe Stückleistung pro Zeit erzielen zu können, müssen entsprechend große und teure Trocknungseinrichtungen eingesetzt werden. Es ist bereits versucht worden, dieses Fügeverfahren mit Hilfe von Schmelzklebstoffen anstelle der vorgenannten Dispersionen zu verbessern. Jedoch werden an den Klebstoff hohe Anforderungen gestellt, wie
- Medienbeständigkeit gegen Alkohol, Säuren, Hydrolyse,
- Temperaturbeständigkeit, da die Korken zur Reinigung ausgekocht werden und nach erfolgter Verklebung auf die erforderliche Form und Kontur geschliffen werden,
- Flexibilität und Festigkeit - beim Ein- und Auskorken kommt es zu Stauchung und Quetschung des Kork-Formkörpers,
- der Klebstoff muß eine gute Adhäsion zum Korksubstrat aufweisen,
- kurze Abbindezeiten zur Erzielung einer hohen Produktivität,
- das Bindemittel muß die lebensmittelrechtliche Zulassung (z.B. FDA § 175.105) aufweisen.

Angesichts dieses Standes der Technik haben sich die Erfinder die Aufgabe gestellt, einen reaktiven Schmelzklebstoff bereitzustellen, der es erlaubt, Formkörper aus Agglomeratkork und Naturkork so miteinander zu verkleben, daß qualitativ hochwertige Korken hergestellt werden können, die zum Verschließen von Getränkeflaschen für hochwertige Getränke geeignet sind.

Die erfindungsgemäße Lösung der Aufgabe ist den Patentansprüchen zu entnehmen. Sie besteht im wesentlichen in der Verwendung von reaktiven Schmelzklebstoffen, die einen Erweichungspunkt vor der Aushärtung gemäß ASTM E28 zwischen 90 °C und 160 °C und, vorzugsweise zwischen 100 °C und 150 °C, besonders bevorzugt zwischen 110° und 130 °C, aufweisen, zum Verkleben von Formkörpern aus Kork. Vorzugsweise werden die Schmelzklebstoffe mit einem Erweichungspunkt gemäß ASTM E 28 zwischen 90°C und 160 °C dazu verwendet, einen Formkörper aus Agglomeratkork an einer oder beiden Stirnflächen mit einer Scheibe aus Naturkork zu verkleben.

Bei einem bevorzugten Herstellverfahren wird der reaktive Schmelzklebstoff mit einem Erweichungspunkt zwischen 90 °C und 160 °C, vorzugsweise zwischen 100°C und 150 °C, besonders bevorzugt zwischen 110° und 130 °C, auf eine Temperatur oberhalb des Erweichungspunktes erwärmt und mit Hilfe einer Düse oder eines stempelartigen Auftragsgerätes nach Art des Siebdrucks durch entsprechend geformte Lochplatten des Auftragsstempels auf mindestens eine Stirnfläche des Formkörpers aus Agglomeratkork aufgetragen. Anschließend wird auf den noch flüssigen, erweichten Schmelzklebstoff eine Korkscheibe aus Naturkork aufgebracht. Nach dem Erkalten der Klebefuge bietet die Klebeverbindung eine ausreichende Verarbeitungsfestigkeit für die nachfolgenden Bearbeitungsstufen des Korks. Diese weiteren Bearbeitungsstufen können Auskochen und Waschen in wässrigen Medien beinhalten sowie ein mechanisches Nachbehandeln des geklebten Formkörpers durch Schleifen oder Schneiden und Polieren sowie Markieren mit Brandstempeln, so daß die endgültige Konfektionsform des Korks erhalten wird.
Der Auftrag des Schmelzklebstoffes kann dabei mit konventionellen Verarbeitungsmaschinen erfolgen, vorzugsweise erfolgt der Auftrag mit Hilfe einer Düse im Spinn-Sprühverfahren oder mit speziell geformten Auftragsstempeln nach Art des Siebdrucks durch entsprechend geformte Lochplatten des Auftragsstempels.

Vorzugsweise besteht ein derartiger Schmelzklebstoff aus Polyurethanbindemitteln, d.h. Umsetzungsprodukten aus Polyolen mit monomeren Di- oder Polyisocyanaten, ggf. unter Hinzufügung von Katalysatoren. Ggf. können diese Schmelzklebstoffe weitere übliche Schmelzklebstoffbestandteile wie klebrigmachende Harze, Wachse, Stabilisatoren, handelsübliche Weichmacher und Netzmittel enthalten.

Monomere Di- oder Polyisocyanate im Sinne dieser Erfindung sind solche aromatischen, aliphatischen oder cycloaliphatischen Diisocyanate, deren Molekulargewicht kleiner als 500 ist. Beispiele für geeignete aromatische Diisocyanate sind alle Isomeren des Toluylendiisocyanats (TDI) entweder in isomerenreiner Form oder als Mischung mehrerer Isomerer, Naphthalin-1,5-diisocyanat (NDI), Naphthalin-1,4-diisocyanat (NDI), Diphenylmethan-4,4'diisocyanat (MDI), Diphenylmethan-2,4'-diisocyanat sowie Mischungen des 4,4'-Diphenylmethandiisocyanats mit dem 2,4'-lsomeren, Xylylen-diisocyanat (XDI), 4,4'-Diphenyl-dimethylmethandiisocyanat, Di- und Tetraalkyldiphenylmethandiisocyanat, 4,4'-Dibenzyldiisocyanat, 1,3-Phenylendiisocyanat, 1,4-Phenylendiisocyanat. Beispiele für geeignete cycloaliphatische Diisocyanate sind die Hydrierungsprodukte der vorgenannten aromatischen Diisocyanate wie z.B. das 4,4'-Dicyclohexylmethandiisocyanat (H₁₂MDI), 1-Isocyanatomethyl-3-isocyanato-1,5,5-trimethyl-cyclohexan (Isophorondiisocyanat, IPDI), Cyclohexan-1,4-diisocyanat, hydriertes Xylylen-diisocyanat (H₆XDI), 1-Methyl-2,4-diisocyanatocyclohexan, m- oder p-Tetramethylxylendiisocyanat (m-TMXDI, p-TMXDI) und Dimerfettsäure-Diisocyanat. Beispiele für aliphatische Diisocyanate sind Tetramethoxybutan-1,4-diisocyanat, Butan-1,4-diisocyanat, Hexan-1,6-diisocyanat (HDI), 1,6-Diisocyanato-2,2,4-trimethylhexan, 1,6-Diisocyanato-2,4,4-trimethylhexan, Lysindiisocyanat sowie 1,12-Dodecandiisocyanat (C₁₂DI). Ein besonders bevorzugt verwendetes Isocyanat ist MDI.

Als Polyole können dabei eine Vielzahl von höhermolekularen Polyhydroxyverbindungen verwendet werden. Als Polyole eignen sich vorzugsweise die bei Raumtemperatur flüssigen, glasartig fest/amorphen oder kristallinen Polyhydroxyverbindungen mit zwei bzw. drei Hydroxylgruppen pro Molekül im Molekulargewichts-Bereich von 400 bis 60000, vorzugsweise im Bereich von 1000 bis 30000. Beispiele sind di- und/oder trifunktionelle Polypropylenglycole, es können auch statistische und/oder Blockcopolymere des Ethylenoxids und Propylenoxids eingesetzt werden. Eine weitere Gruppe von vorzugsweise einzusetzenden Polyethern sind die Polytetramethylenglykole (Poly(oxytetramethylen)glycol, Poly-THF), die z.B. durch die saure Polymerisation von Tetrahydrofuran hergestellt werden, dabei liegt der Molekulargewichts-Bereich der Polytetramethylenglykole zwischen 600 und 6000, vorzugsweise im Bereich von 800 bis 5000.
Weiterhin sind als Polyole die flüssigen, glasartig amorphen oder kristallinen Polyester geeignet, die durch Kondensation von Di- bzw. Tricarbonsäuren, wie z.B. Adipinsäure, Sebacinsäure, Glutarsäure, Azelainsäure Korksäure, Undecandisäure Dodecandisäure, 3,3-Dimethylglutarsäure,Terephthalsäure, Isophthalsäure, Hexahydrophthalsäure, Dimerfettsäure oder deren Mischungen mit niedermolekularen Diolen bzw. Triolen wie z.B. Ethylenglycol, Propylenglycol, Diethylenglycol, Triethylenglycol, Dipropylenglycol, 1,4-Butandiol, 1,6-Hexandiol, 1,8-Octandiol, 1,10-Decandiol, 1,12-Dodecandiol, Dimerfettalkohol, Glycerin, Trimethylolpropan oder deren Mischungen hergestellt werden können.
Eine weitere Gruppe der erfindungsgemäß einzusetzenden Polyole sind die Polyester auf der Basis von ε-Caprolacton, auch "Polycaprolactone" genannt.

Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäure-enthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden. Weitere geeignete Polyole sind Polycarbonat-Polyole und Dimerdiole (Fa. Henkel) sowie Rizinusöl und dessen Derivate. Auch die Hydroxy-funktionellen Polybutadiene, wie sie z.B. unter dem Handelsnamen "Poly-bd" erhältlich sind, können für die erfindungsgemäßen Zusammensetzungen als Polyole eingesetzt werden.

Weiterhin eignen sich als Polyole lineare und/oder schwach verzweigte Acrylester-Copolymer-Polyole, die beispielsweise durch die radikalische Copolymerisation von Acrylsäureestern, bzw. Methacrylsäureestern mit Hydroxy-funktionellen Acrylsäure- und/oder Methacrylsäure-Verbindungen wie Hydroxyethyl(meth)acrylat oder Hydroxypropyl(meth)acrylat hergestellt werden können. Wegen dieser Herstellungsweise sind die Hydroxylgruppen bei diesen Polyolen in der Regel statistisch verteilt, so daß es sich hierbei entweder um lineare oder schwach verzweigte Polyole mit einer durchschnittlichen OH-Funktionalität handelt. Obwohl für die Polyole die difunktionellen Verbindungen bevorzugt sind, können auch, zumindest in untergeordneten Mengen, höherfunktionelle Polyole verwendet werden.

Die erfindungsgemäß zu verwendenden Polyurethanschmelzklebstoff - Zusammensetzungen können in besonders bevorzugter Ausführungsform eine Polyurethan - Zusammensetzung mit keinem bzw. sehr niedrigem Gehalt an monomeren, niedermolekularen Diisocyanaten eingesetzt werden. Derartige Schmelzklebstoff - Zusammensetzungen sind z.B. Gegenstand der WO01/40342. Die Lehre dieser Anmeldung in Bezug auf die Zusammensetzungen mit niedrigem Restmonomergehalt ist ausdrücklich Gegenstand der vorliegenden Anmeldung.

Die erfindungsgemäß zu verwendenden Zusammensetzungen können ggf. zusätzlich Katalysatoren enthalten, die die Bildung des Polyurethan - Prepolymeren bei seiner Herstellung und / oder die Feuchtigkeitsvernetzung nach der Applikation des Klebstoffes beschleunigen. Als erfindungsgemäß einsetzbare Katalysatoren eignen sich dabei insbesondere die in der vorgenannten WO01/40342 auf Seite 11 bis 13 genannten Katalysatoren in den dort angegebenen Mengen.

Weiterhin kann die erfindungsgemäße Zusammensetzung ggf. zusätzlich Stabilisatoren, haftvermittelnde Zusätze wie klebrigmachende Harze, Füllstoffe, Pigmente, Weichmacher und/oder nichtreaktive thermoplastische Polymere enthalten.
Als "Stabilisatoren" im Sinne dieser Erfindung sind einerseits Stabilisatoren zu verstehen, die eine Viskositätsstabilität des Polyurethanprepolymeren während der Herstellung, Lagerung bzw. Applikation bewirken. Hierfür sind z.B. monofunktionelle Carbonsäurechloride, monofunktionelle hochreaktive Isocyanate, aber auch nicht-korrosive anorganische Säuren geeignet, beispielhaft seien genannt Benzoylchlorid, Toluolsulfonylisocyanat, Phosphorsäure oder phosphorige Säure. Des weiteren sind als Stabilisatoren im Sinne dieser Erfindung Antioxidantien, UV-Stabilisatoren oder Hydrolyse-Stabilisatoren zu verstehen. Die Auswahl dieser Stabilisatoren richtet sich zum einen nach den Hauptkomponenten der Zusammensetzung und zum anderen nach den Applikationsbedingungen sowie den zu erwartenden Belastungen des ausgehärteten Produktes. Wenn das Polyurethanprepolymer überwiegend aus Polyetherbausteinen aufgebaut ist, sind hauptsächlich Antioxidantien, ggf. in Kombination mit UV-Schutzmitteln, notwendig. Beispiele hierfür sind die handelsüblichen sterisch gehinderten Phenole und/oder Thioether und/oder substituierten Benzotriazole oder die sterisch gehinderten Amine vom Typ des HALS ("Hindered Amine Light Stabilizer"). Bestehen wesentliche Bestandteile des Polyurethanprepolymers aus Polyesterbausteinen, können Hydrolyse-Stabilisatoren, z.B. vom Carbodiimid-Typ, eingesetzt werden.

Typ und Menge der bei Raumtemperatur flüssigen, glasartig fest-amorphen oder kristallinen Polyhydroxyverbindungen, sowie deren Molekulargewicht und das stöchiometrische Verhältnis von Gesamthydroxylgruppen zu Isocyanatgruppen der Di- bzw. Polyisocyanate der erfindungsgemäß zu verwendenden Schmelzklebstoffe werden dabei so ausgewählt, daß die Schmelzklebstoff-Zusammensetzung einen Erweichungspunkt gemäß ASTM E 28 zwischen 90 °C und 160 °C und, vorzugsweise zwischen 100 °C und 150 °C, besonders bevorzugt zwischen 110° und 130 °C, aufweist. Sämtliche Zusammensetzungsbestandteile werden außerdem so ausgewählt, daß sie nicht oder nur in vernachlässigbar geringem Umfang durch wässrig alkoholische Lösungen oder Säuren aus dem ausgehärteten Schmelzklebstoff extrahierbar sind. Dadurch ist gewährleistet, daß das Bindemittel die lebensmittelrechtlichen Zulassung z.B. gemäß FDA erhalten kann.

Durch den hohen Erweichungspunkt des nicht ausgehärteten reaktiven Schmelzklebstoffes sowie durch eine Shore-Härte des ausgehärteten Klebstoffes im Bereich von Shore D 40 - 60 ist eine Beständigkeit der Verklebung gegen Kochendwasser bereits kurz nach dem Fügen der Kork-Formkörper gewährleistet. Außerdem weist die Verklebung für die weitere Verarbeitung ( Schleifbarkeit des verklebten Formkörpers) eine hinreichend hohe Festigkeit auf. Dies ermöglicht im Vergleich zum Stand der Technik eine hohe Effizienz der Korkproduktion auf Fertigungsmaschinen mit einer Geschwindigkeit von 5000 Korken / Stunde bis zu mehr als 10 000 Korken / Stunde.

Es ist weiterhin möglich, reaktive Schmelzklebstoffe in Granulatform gemäß der Lehre der noch unveröffentlichten DE 10122437.0 zur Herstellung der Korkstopfen zu verwenden.

Zur näheren Erläuterung der Erfindung sollen die nachfolgenden Beispiele dienen, sie haben nur exemplarischen Charakter und decken nicht die gesamte Breite der erfindungsgemäßen Verwendung von reaktiven Schmelzklebstoffen zur Herstellung von Kork-Formkörpern ab. Aus den oben genannten Angaben kann der Fachmann jedoch die gesamte Anwendungsbreite der Erfindung leicht herleiten.

### Beispiele

Aus 41 Gew.- Teilen eines Polyesterpolyols aus Hexandiol, Terephthalsäure und Adipinsäure mit der OH-Zahl 30,5 und einem Erweichungspunkt von 130 °C (Ring and Ball), 18 Teilen eines C9-Kohlenwasserstoffharzes, 10 Teilen eines flüssigen Polyesters, OH-Zahl 105, 8 Teilen eines Prepolymers aus Polycaprolacton und MDI, 6 Teilen eines Polypropylenglycols (Molekulargewicht 1000), 5 Teilen eines Ethylen-Vinylacetat-Copolymers (VA-Anteil 28 % ), 10 Teilen MDI sowie 2 Teilen einer Polyethylenzubereitung in C14-Alkoholen wurde ein Schmelzklebstoff hergestellt.

Dieser Schmelzklebstoff hatte die folgenden charakteristischen Eigenschaften:

| | |
|---|---|
| **EP [°C]** | **118** |
| **Viskostät[mPa.s]@130 °C** | **Ca. 60.000** |
| **Viskostät[mPa.s]@150 °C** | **Ca. 30.000** |
| **Zugfestigkeit [N/mm**^{**2**}**] nach 3o min** | **3** |
| **Dehnung [ % ] nach 30 min** | **125** |
| **Zugfestigkeit [N/mm**^{**2**}**] nach 7 Tage** | **34** |
| **Dehnung [ % ] nach 7 Tagen** | **500** |

Mit dem vorstehend beschriebenen Schmelzklebstoff wurden Formkörper aus Agglomeratkork an beiden Stirnflächen mit Scheiben aus Naturkork verklebt. In Zugscherfestigkeiten zeigten die Verklebungen bei jedem Test einen Bruch im Korksubstrat.

6 Stunden nach Verklebung bestanden die Verklebungen den Kochendwassertest bis zu 2 Stunden. Damit ist gezeigt, daß der vorstehend beschriebene Schmelzklebstoff hervorragend geeignet ist, um Formkörper aus Agglomeratkork mit Naturkorkscheiben zu verkleben.

## Patentansprüche

1. Verwendung eines reaktiven Schmelzklebstoffes mit einem Erweichungspunkt gemäß ASTM E 28 zwischen 90 °C und 160 °C zur Herstellung von Korkstopfen.

2. Verwendung nach Anspruch 1, **dadurch gekennzeichnet, daß** ein Formkörper aus Agglomeratkork mit einer oder zwei Scheiben aus Naturkork mit Hilfe des reaktiven Schmelzklebstoffes verklebt wird.

3. Verfahren zur Herstellung von Korkstopfen **gekennzeichnet durch** die folgenden wesentlichen Verfahrenschritte
a) Aufbringen eines reaktiven Polyurethanschmelzklebstoffes mit einem Erweichungspunkt zwischen 90 °C und 160 °C und, vorzugsweise zwischen 100 °C und 150 °C, besonders bevorzugt zwischen 110° und 130 °C, mit Hilfe einer Düse oder eines Stempels nach Art des Siebdrucks **durch** entsprechend geformte Lochplatten des Auftragsstempels auf mindestens eine Stirnfläche eines Formkörpers aus Agglomeratkork.
b) Fügen einer Korkscheibe aus Naturkork auf die Klebstoff-benetzte(n) Stirnfläche(n) des Formkörpers.
c) ggf. mechanisches Nachbehandeln des geklebten Formkörpers **durch** Schleifen oder Schneiden.

4. Verwendung von verklebten Korken hergestellt nach Anspruch 3 zum Verschließen von Getränkeflaschen, insbesondere Wein- oder Schaumweinflaschen.
